# EUROPEAN PATENT APPLICATION

(11) **EP 2 337 260 A2**
(43) Date of publication of application: **22.06.2011**
(21) Application number: 10172801.2
(22) Date of filing: 13.08.2010
(51) Int. Cl.: H04L 5/00

(54) **Method and device for processing downlink control channel**

(30) Priority: 15.12.2009 KR 20090124792
(71) Applicant: Electronics and Telecommunications Research Institute, Daejeon 305-700 (KR)
(72) Inventor: Kim, Kyung Sook, Daejeon 305-707 (KR); Shin, Jaesheung, Daejeon 305-761 (KR); Park, Hyun Seo, Daejeon 305-358 (KR)
(74) Representative: Betten & Resch

(57) **Abstract**

A device for processing a downlink control channel in a first component carrier set that is schedulable to a downlink or an uplink sets a second component carrier set that includes at least one of a plurality of component carriers included in the first component carrier set, and monitors a physical downlink control channel for a format of downlink control information that requires monitoring in the component carrier included in the second component carrier set. Next, the device decodes the downlink control information in the physical downlink carrier channel and obtains the downlink control information corresponding to each of the plurality of component carriers.

## Description

### BACKGROUND OF THE INVENTION

### (a) Field of the Invention

The present invention relates to a method and a device for processing a downlink control channel.

### (b) Description of the Related Art

In a long-term evolution (LTE) system, a physical downlink control channel (hereinafter referred to as "PDCCH") is defined, and downlink control information (hereinafter referred to as "DCI"), which carries scheduling allocation information on downlink (DL) and uplink (UL), other control information, etc., is transmitted to a terminal. At this time, one PDCCH is transmitted on a aggregation of one or several consecutive control channel element (hereinafter referred to as "CCE"),

A bandwidth extension function can be applied to an LTE-Advanced system in order to maximize performance. Herein, the bandwidth extension function is a technology of providing downlink and uplink services using a plurality of component carriers.

When using the bandwidth extension function, the terminal can set a downlink component carrier set (DL) that can receive the physical downlink shared channel (hereinafter referred to as "PDSCH"), and the terminal can set an uplink component carrier set that can transmit a physical uplink shared channel (hereinafter referred to as "PUSCH"). The terminal receives the downlink PDSCH in a carrier indicated by a carrier indicator, or transmits the uplink PUSCH by using carrier indicator additional information that is included in the DCI transmitted through the PDCCH.

As described above, the terminal performs the downlink and uplink transmission by using a plurality of component carriers in the component carrier set (CCS) that can receive the downlink PDSCH or transmit the uplink PUSCH, At this time, the terminal performs blind decoding of a DCI format to be monitored at each carrier in the component carrier set in order to obtain the DCI transmitted through the PDCCH, thereby increasing the number of performing the decoding of the downlink control channel. As a result, a problem of deteriorating unnecessary power consumption and performance degradation of the terminal occurs.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a device and method for allowing terminals to simultaneously process decoding of downlink control channels of a plurality of component carriers.

In order to achieve the above objects, an exemplary embodiment according to the present invention provides a method for processing a downlink control channel in a first component carrier set that is able to receive resource assignments for downlink and uplink transmission including:
setting a second component carrier set that includes at least one of a plurality of component carriers included in the first component carrier set; monitoring a physical downlink control channel corresponding to a component carrier included in the second component carrier set; and decoding the monitored physical downlink control channel and obtaining downlink control information corresponding to at least one of the plurality of component carriers of the first component carrier set.

Another exemplary embodiment according to the present invention provides a device for processing a downlink control channel, including: a first setting unit that sets a first component carrier set that is able to receive resource assignments for downlink and uplink transmission; a second setting unit that sets a second component carrier set including at least one of a plurality of component carriers included in the first component carrier set; and a processor that decodes a physical downlink control channel corresponding to a component carrier included in the second component carrier set to obtain downlink control information corresponding to at least one of the plurality of component carriers of the first component carrier set.

### BRIEF DESCRIPTION OF THE DRAWINGS

FIG. 1 is a diagram schematically showing a device for processing a downlink control channel according to an exemplary embodiment of the present invention;
FIG, 2 is a flowchart showing a method for processing a downlink control channel according to the exemplary embodiment of the present invention;
FIG. 3 is an example showing a method for setting the ACCS in the method for processing the downlink control channel according to the exemplary embodiment of the present invention;
FIG. 4 is an example showing another method for setting the ACCS in the method for processing the downlink control channel according to the exemplary embodiment of the present invention; and
FIG. 5 is an example showing another method for setting the ACCS in the method for processing the downlink control channel according to the exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In the specification, unless explicitly described to the contrary, the word "comprise" and variations such as "comprises" or "comprising" will be understood to imply the inclusion of stated elements but not the exclusion of any other elements.

In the specification, a terminal may designate a mobile station (MS), a mobile terminal (MT), a subscriber station (SS), a portable subscriber station (PSS), user equipment (UE), an access terminal (AT), etc., and may include the entire or partial functions of the mobile station, the mobile terminal, the subscriber station, the portable subscriber station, the user equipment, the access terminal, etc.

In the specification, a base station (BS) may designate an access point (AP), a radio access station (RAS), a node B, an evolved node-B (eNB), a transmitting/receiving base station (BTS), a mobile multihop relay (MMR)-BS, etc., and may include the entire or partial functions of the access point, the radio access station, the nodeB, the eNB, the transmitting/receiving base station, the MMR-BS, etc.

Hereinafter, a method and a device for processing a downlink control channel according to an exemplary embodiment of the present invention will be described in detail with reference to the accompanying drawings.

First, a search space of a physical downlink carrier channel (hereinafter referred to as a "PDCCH"), which is monitored by a terminal, is determined by a radio network temporary identifier (RNTI) and aggregation levels 1, 2, 4, and 8 for each subframe. The aggregation level is a unit of a control channel element (hereinafter referred to as "CCE") configuring the physical downlink control channel region, and the size of the aggregation level indicates the number of consecutive CCEs that are used to transmit the PDCCH.

A plurality of PDCCH candidates exist in the search space. Herein, the position of the PDCCH candidates is generated for each size of the aggregation level of each CCE in the search space. For example, the PDCCH candidate in the aggregation level 2 is indicated at each two CCEs, and the PDCCH candidates in the aggregation level 4 are indicated at each four CCEs.

The search space can be classified into a common search space and a UE-specific search space, and the common search space is monitored by all the terminals in a cell and the UE-specific search space is monitored by the specific terminal. The terminal monitors the common search space and/or the UE-specific search space according to control information to be received.

The number of PDCCH candidates that are monitored by the terminals existing in each search space may be defined as in the following Table 1.

**(Table 1)**

| Search space | | | Number of PDCCH candidates |
|---|---|---|---|
| Type | Aggregation level | Size (in CCE) | |
| Specific terminal search space | 1 | 6 | 6 |
| | 2 | 12 | 6 |
| | 4 | 8 | 2 |
| | 8 | 16 | 2 |
| Common search space | 4 | 16 | 4 |
| | 8 | 16 | 2 |

The following Table 1 indicates the number of PDCCH candidates that are defined in 3GPP TS 36.213, which is only one example.

The terminal performs the decoding of the PDCCH candidates that each correspond to the downlink control information (hereinafter referred to as "DCI"). Herein, the DCI includes the downlink and uplink scheduling allocation information and other control information, etc.

Referring to Table 1, the UE-specific search period supports the CCE aggregation levels L1, L2, L4, and L8, and the common search space supports the CCE aggregation levels L4 and L8. Herein, the size of the search space is determined according to the size of the aggregation level or the number of PDCCH candidates.

The terminal performs the decoding on the common search space that is the aggregation levels L4 and L8, and performs the decoding on each UE-specific search space that is the aggregation levels L1, L2, L4, and L8. For example, the terminal performs blind decoding a total of 16 times (PDCCH candidate of L1x6 number + PDCCH candidates of L2 x6 number + PDCCH candidate of L4x2 number + PDCCH candidate of L8x2 number) for a DCI format and the terminal attempt to decode each of the PDCCHs in the set according to all the monitored DCI formats, In other words, the terminal in the UE-specific search space performs the decoding on each PDCCH candidates corresponding to the DCI format 16xk times when the DCI format to be monitored is k number per each component carrier.

Therefore, the exemplary embodiment of the present invention is to reduce the decoding frequency for the PDCCH candidates.

In the exemplary embodiment of the present invention, the base station defines PDCCH resources and transmits the downlink control information, that is, the DCI, to the terminal by using the PDCCH resources.

At this time, the terminal performs the downlink and uplink transmission by using a plurality of component carriers (hereinafter referred to as "CC") in a component carrier set (hereinafter referred to as "CCS") that is schedulable for the downlink or the uplink resources.

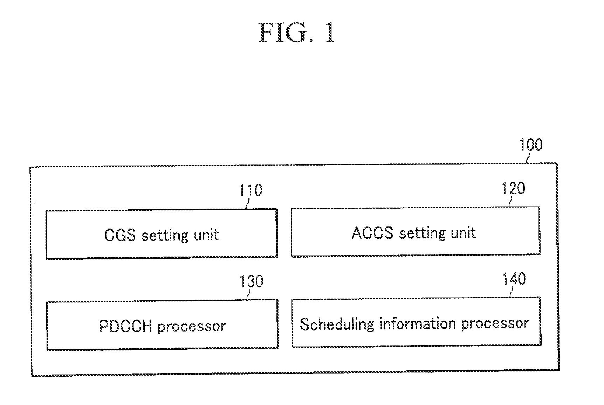

FIG. 1 is a diagram schematically showing a device for processing a downlink control channel according to an exemplary embodiment of the present invention.

Referring to FIG. 1, a device 100 for processing a downlink control channel includes a CCS setting unit 110, an active component carrier set (hereinafter referred to as "ACCS") setting unit 120, a PDCCH processor 130, and a scheduling information processor 140.

The CCS setting unit 110 sets the CCS that is able to receive resource assignments for downlink and uplink transmission.

The ACCS setting unit 120 sets the ACCS including at least one of the plurality of CCs that are included in the CCS set by the CCS setting unit 110. Herein, the ACCS consists of component carriers that require the monitoring of the PDCCH and the component carrier included in the ACCS is a carrier supporting the PDCCH that is the downlink control channel.

The terminal according to the exemplary embodiment of the present invention receives the configuration information corresponding to the CCS and the ACCS that are set from the base station, and the CCS setting unit 110 and the ACCS setting unit 120 set the CCS and the ACCS based thereon, but it is not limited thereto.

The PDCCH processor 130 monitors the PDCCH of the component carrier that is included in the ACCS set in the ACCS setting unit 120. Next, the PDCCH processor 130 decodes the DCI formats to be monitored in each PDCCH of the component carriers included in the ACCS, When the DCI information obtained in the PDCCH processor 130 includes the carrier indicator field, the DCI information is processed as one corresponding to the component carrier indicated by the carrier indicator field. In addition, when the DCI information obtained in the PDCCH processor 130 does not include the carrier indicator field, the DCI information is processed as one corresponding to the same component carrier as the component carrier transmitted by the PDCCH or single linked uplink component carrier.

The scheduling information processor 140 processes the PDSCH reception or the PUSCH transmission according to the DCI decoded in the PDCCH processor 130. Herein, the decoded DCI includes downlink scheduling allocation information or uplink scheduling allocation information.

In other words, the scheduling information processor 140 processes the PDSCH reception according to the downlink scheduling information for the carrier indicated by the DCI decoded in the PDCCH processor 130. In addition, the scheduling information processor 140 processes the PUSCH transmission according to the uplink scheduling information for the carrier indicated by the DCI decoded in the PDSCH processor 130.

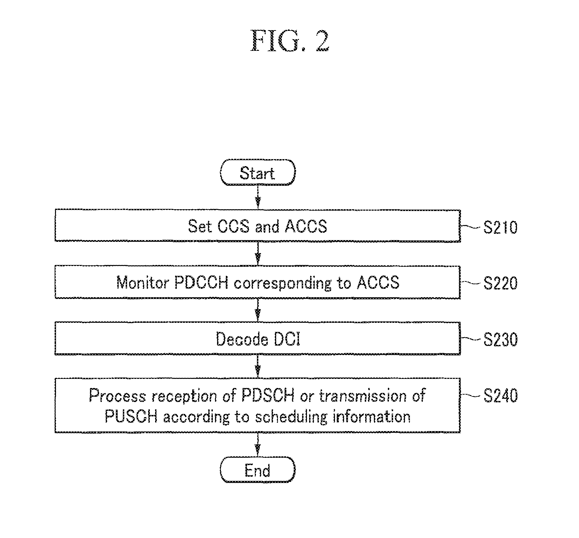

For example, the scheduling information processor 140 determines the downlink scheduling allocation information of the DCI as one corresponding to a component carrier of the monitored physical downlink control channel and determines the uplink scheduling allocation information of the DCI as one corresponding to uplink component carrier that is single linked to the component carrier of the monitored physical downlink control channel. Next, a method for processing a downlink control channel according to the exemplary embodiment of the present invention will be described in detail with reference to FIGS. 2 to 4.

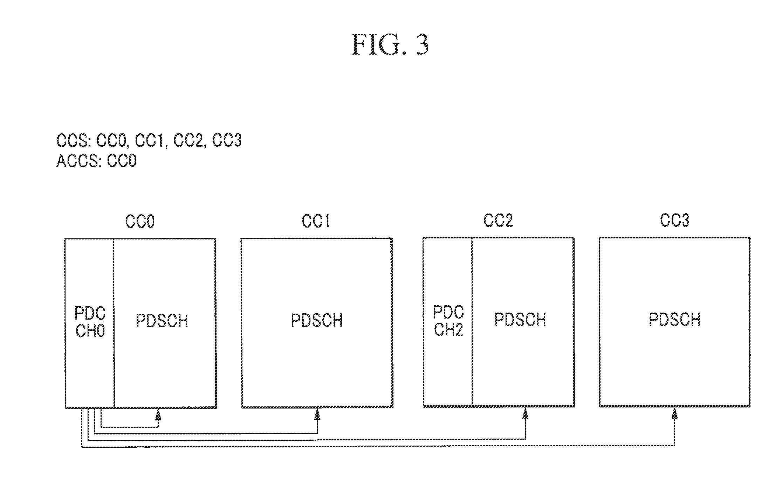

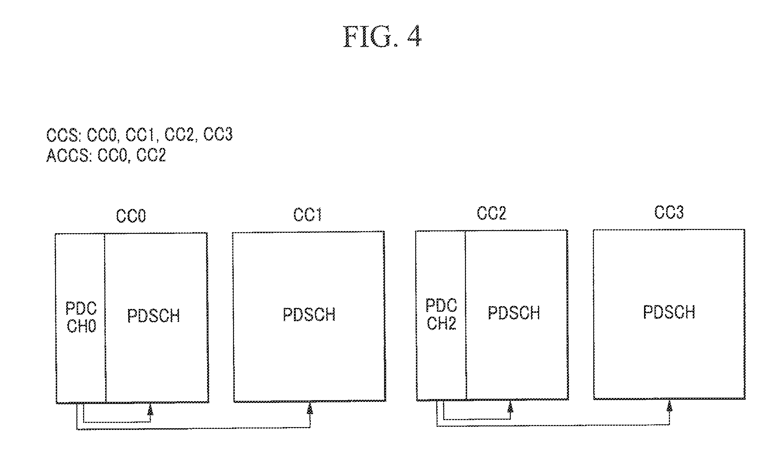

FIG. 2 is a flowchart showing a method for processing a downlink control channel according to the exemplary embodiment of the present invention. In addition, FIG. 3 is an example showing a method for setting the ACCS in the method for processing the downlink control channel according to the exemplary embodiment of the present invention, and FIG. 4 is an example showing another method for setting the ACCS in the method for processing the downlink control channel according to the exemplary embodiment of the present invention.

First, in the terminal, the CCS that is able to receive resource assignments for downlink and uplink transmission includes the plurality of CCs.

Referring to FIG. 2, the device 100 for processing the downlink control channel sets the CCS that is schedulable for the downlink or the uplink, and sets at least one of the plurality of CCs included in the set CCS as the ACCS that requires the PDCCH monitoring (S21 0).

At this time, the device 100 for processing the downlink control channel can set the ACCS as follows.

Referring to FIG. 3, the set CCS includes, for example, CC0, CC1, CC2, and CC3. In this case, the device 100 for processing the downlink control channel sets CC0 of the plurality of CCs included in the set CCS as the ACCS.

Referring to FIG. 4, the device 100 for processing the downlink control channel sets CC0 and CC2 as the ACCS when the CCS includes, for example, CC0, CC1, CC2, and CC3.

As described above, the device 100 for processing the downlink control channel sets at least one of a plurality of CCs as the ACCS and then monitors the PDCCH corresponding to the set ACCS (S220).

Referring to FIG. 3, the device 100 for processing the downlink control channel monitors the set ACCS, that is, only the PDCCH corresponding to CC0. In addition, referring to FIG. 4, the device 100 for processing the downlink control channel monitors the PDCCHs that each correspond to the set ACCS, that is, CC0 and CC2.

In other words, the device 100 for processing the downlink control channel according to the exemplary embodiment of the present invention monitors the PDCCH corresponding to the set CC of the plurality of CCs, thereby making it possible to reduce the power consumption of the terminal.

Next, the device 100 for processing the downlink control channel decodes the DCI to be monitored in each PDCCH of the carriers that are included in the ACCS (S230). Further, the device 100 for processing the downlink control channel obtains the DCI corresponding to each CCs that is schedulable for the downlink or the uplink for the corresponding terminal from the PDCCH of the monitored ACCS, and obtains the carrier information indicated by the DCI based on the carrier indicator field included in each of the obtained DCIs.

For example, referring to FIG. 3, the device 100 for processing the downlink control channel obtains four DCIs corresponding to CC0, CC1 , CC2, and CC3 through PDCCHO of CC0. Next, the device 100 for processing the downlink control channel processes the scheduling information on the CCs indicated by the carrier indicator field included in each of the obtained DCIs.

Referring to FIG. 4, the device 100 for processing the downlink control channel obtains the DCIs each corresponding to CC0 and CC1 through PDCCH0of CC0, and obtains the DCI each corresponding to CC2 and CC3 through PDCCH2 of CC2. Next, the device 100 for processing the downlink control channel processes the scheduling information on the CC indicated by the carrier indicator field included in each of the obtained DCIs.

In other words, the device 100 for processing the downlink control channel avoids the unnecessary PDCCH monitoring for each of CC0, CC1, CC2, and CC3 included in the CCS, and monitors the PDCCH only for the set ACCS, thereby making it possible to reduce the power consumption of the terminal and the blind decoding number of the PDCCH. In addition, the PDCCH resources can be dispersed and allocated, and the collision of the PDCCH resources can be avoided by dispersing and transmitting the DCI information into the plurality of component carriers.

After the DCI is decoded, the device 100 for processing the downlink control channel processes the PDSCH reception according to the downlink scheduling information for the carrier indicated by the decoded DCI, or processes the PUSCH transmission according to the uplink scheduling information for the carrier indicated by the decoded DCI (S240). For example, referring to FIG. 3, the device 100 for processing the downlink control channel processes the PDSCH reception according to the downlink scheduling information of the CCs corresponding to each of the four decoded DCIs.

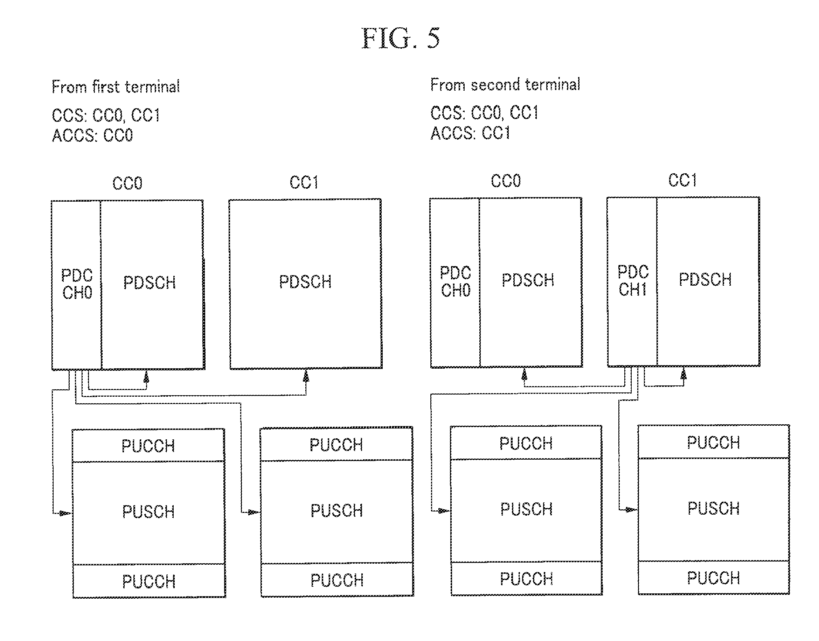

Next, in the method for processing the downlink control channel according to the exemplary embodiment of the present invention, another method for setting the ACCS will be described in detail with reference to FIG. 5.

FIG. 5 is an example showing another method for setting the ACCS in the method for processing the downlink control channel according to the exemplary embodiment of the present invention.

Referring to FIG. 5, the device 100 for processing the downlink control channel corresponding to the first terminal sets CC0 as the ACCS when the CCS includes, for example, CC0 and CC1.

The device 100 for processing the downlink control channel corresponding to the second terminal sets CC1 as the ACCS when the CCS includes, for example, CC0 and CC1.

Next, the device 100 for processing the downlink control channel corresponding to the first terminal monitors only PDCCH0 corresponding to the set ACCS, that is, CC0. Further, the device 100 for processing the downlink control channel corresponding to the second terminal monitors only PDCCH1 corresponding to the set ACCS, that is, CC1.

In other words, the base station divides the CC that requires the PDCCH monitoring for each terminal and allocates it. Then, the first terminal and the second terminal monitor only the PDCCH corresponding to each of the set CCs, thereby making it possible to prevent the collision generated when the PDCCH resource is allocated.

After PDCCH0 is monitored, the device 100 for processing the downlink control channel obtains two DCIs each corresponding to CC0 and CC1 through PDCCH0 corresponding to CC0.

Further, after PDCCH1 is monitored, the device 100 for processing the downlink control channel obtains two DCIs each corresponding to CC0 and CC1 through PDCCH1 corresponding to CC1.

The device 100 for processing the downlink control channel obtains the component carrier information corresponding to each of the four DCIs by using four carrier indicators included in each of the obtained four DCIs.

Next, the device 100 for processing the downlink control channel processes the PDSCH reception or the PUSCH transmission, according to the scheduling information for the component carriers indicated by each of the decoded DCIs.

The device for processing the downlink control channel according to the exemplary embodiment of the present invention decodes only the set aggregation level when the group of the aggregation level candidates for the CCs is further set upon monitoring the PDCCH, thereby making it possible to reduce the decoding number of the PDCCH. At this time, the group of the aggregation level candidates includes at least one of the PDCCH aggregation levels 1, 2, 4, and 8.

According to the exemplary embodiment of the present invention, the terminal sets the second component carrier set including at least one of the plurality of component carriers included in the first component carrier set that is schedulable for the downlink or uplink and decodes the downlink control channel for the component carrier included in the second component carrier set, thereby making it possible to reduce the number of the PDCCH decoding performed by the terminal. Through this, the terminal can improve the PDCCH processing performance.

In addition, according to the exemplary embodiment of the present invention, the base station can set the component carrier transmitted by the scheduling information for each terminal according to the channel condition of the terminal and the amount of the PDCCH resource, thereby making it possible to prevent a collision from occurring when the PDCCH resource is allocated and to efficiency use the resources.

The above-mentioned exemplary embodiments of the present invention are not embodied only by an apparatus and method. Alternatively, the above-mentioned exemplary embodiments may be embodied by a program performing functions that correspond to the configuration of the exemplary embodiments of the present invention, or a recording medium on which the program is recorded. These embodiments can be easily devised from the description of the above-mentioned exemplary embodiments by those skilled in the art to which the present invention pertains.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

According to an exemplary embodiment , there is provided a device for processing a downlink control channel in a first component carrier set that is schedulable to a downlink or an uplink sets a second component carrier set that includes at least one of a plurality of component carriers included in the first component carrier set, and monitors a physical downlink control channel for a format of downlink control information that requires monitoring in the component carrier included in the second component carrier set. Next, the device decodes the downlink control information in the physical downlink carrier channel and obtains the downlink control information corresponding to each of the plurality of component carriers.

## Claims

1. A method for processing a downlink control channel in a first component carrier set that is able to receive resource assignments for downlink and uplink transmission, comprising:
setting a second component carrier set that includes at least one of a plurality of component carriers included in the first component carrier set;
monitoring a physical downlink control channel corresponding to a component carrier included in the second component carrier set; and
decoding the monitored physical downlink control channel and obtaining downlink control information corresponding to at least one of the plurality of component carriers of the first component carrier set.

2. The method for processing a downlink control channel of claim 1,
wherein
the second component carrier set includes component carriers that requires the monitoring of the physical downlink control channel among the plurality of component carriers of the first component carrier set.

3. The method for processing a downlink control channel of claim 1 or 2, wherein,
in the obtaining the downlink control information,
the downlink control information includes a carrier indicator field for a component carrier corresponding to downlink or uplink resource assignment.

4. The method for processing a downlink control channel of claim 3, further comprising
processing the reception of a physical downlink shared channel or processing the transmission of a physical uplink shared channel in the component carrier corresponding to the carrier indicator field.

5. The method for processing a downlink control channel of anyone of claims 1 to 4, wherein,
in the obtaining the downlink control information,
when the downlink control information does not include a carrier indicator field for a component carrier corresponding to downlink or uplink resource assignment, the downlink control information is determined as one corresponding to a carrier of the monitored physical downlink control channel

6. The method for processing a downlink control channel of anyone of claims 1 to 5, wherein
the downlink control information includes downlink scheduling allocation information and uplink scheduling allocation information.

7. The method for processing a downlink control channel of claim 6,
wherein
in the obtaining the downlink control information,
when the downlink control information does not include a carrier indicator field for a component carrier corresponding to downlink or uplink resource assignment,
the downlink scheduling allocation information of the downlink control information is determined as one corresponding to a component carrier of the monitored physical downlink control channel and the uplink scheduling allocation information is determined as one corresponding to uplink component carrier that is single linked to the component carrier of the monitored physical downlink control channel.

8. A device for processing a downlink control channel, comprising:
a first setting unit that sets a first component carrier set that is able to receive resource assignments for downlink and uplink;
a second setting unit that sets a second component carrier set including at least one of a plurality of component carriers included in the first component carrier set; and
a processor that decodes a physical downlink control channel corresponding to a component carrier included in the second component carrier set to obtain downlink control information corresponding to at least one of the plurality of component carriers of the first component carrier set.

9. The device for processing a downlink control channel of claim 8,
wherein
the second component carrier set includes component carriers that requires the monitoring of the physical downlink control channel among the plurality of component carriers of the first component carrier set.

10. The device for processing a downlink control channel of claim 8 or 9, wherein
the second setting unit
sets an aggregation level candidate of the physical downlink control channel for a component carrier included in the second component carrier set.

11. The device for processing a downlink control channel of claim 10,
wherein
the processor decodes downlink control information corresponding to the aggregation level candidates in a component carrier where a group of the aggregation level candidates are set and decodes downlink control information corresponding to all aggregation level candidates in a component carrier where the group of the aggregation level candidates are not set.

12. The device for processing a downlink control channel of anyone of claims 8 to 11, wherein
the downlink control information includes a carrier indicator field, wherein the processor processes the downlink control information as one corresponding to a component carrier indicated by the carrier indicator field and processes reception of a physical downlink shared channel or processes transmission of a physical uplink shared channel according to the downlink control information in the carrier corresponding to the carrier indicator field.

13. The device for processing a downlink control channel of anyone of claims 8 to 12, wherein
when the downlink control information does not include a carrier indicator field,
the processor
processes the downlink resource assignment information as one corresponding to the same component carrier as a component carrier through which the physical downlink control channel is transmitted; and
processes the uplink resource assignment information as one corresponding to single linked uplink component carrier..

14. The device for processing a downlink control channel of anyone of claims 8 to 13, wherein
the processor
monitors the physical downlink control channel that corresponds to the second component carrier set and obtains the downlink control information corresponding to each of the plurality of component carriers in the monitored physical downlink control channel.

15. The device for processing a downlink control channel of claim 14,
wherein
the downlink control information corresponding to each component carrier is obtained based on the carrier indicator field included in each decoded downlink control information.
